# DEMANDE DE BREVET EUROPEEN

(11) **EP 4 686 588 A1**
(43) Date de publication de la demande: **04.02.2026**
(21) Numéro de dépôt: 25193311.5
(22) Date de dépôt: 01.08.2025
(51) Int. Cl.: B60J 5/10

(54) **PANNEAU EXTÉRIEUR DE HAYON DE VÉHICULE AUTOMOBILE**

(30) Priorité: 02.08.2024 FR 2408573
(71) Demandeur: OPmobility SE, 69007 Lyon (FR)
(72) Inventeur: COUDRON, Philippe, 01150 SAINTE-JULIE (FR); BRIAND, Benoît, 01150 SAINTE-JULIE (FR)
(74) Mandataire: LLR

(57) **Abrégé**

L'invention concerne un panneau extérieur (20) de hayon de véhicule automobile destiné à être collé sur une doublure, le panneau extérieur (20) comprenant :
- un corps principal,
- un renfoncement formant un logement de bloc optique et comprenant une paroi de fond, et
- une paroi de collage (32) s'étendant depuis la paroi de fond et comprenant une portion terminale (36) reliée à un bord supérieur (26) du panneau extérieur (20),
- une première paroi de liaison (40) s'étendant depuis la portion terminale (36) de la paroi de collage (32) jusqu'à une face interne du corps principal (22) de manière à former une seconde rampe de collage du panneau extérieur (20), une extrémité (44) de la première paroi de liaison (40) fixée à la face interne du corps principal ayant une épaisseur inférieure à celle de la paroi supérieure (27) du corps principal.

## Description

L'invention concerne les hayons de véhicule automobile en matière plastique comprenant un panneau extérieur et une doublure, et plus particulièrement les panneaux extérieurs de tels hayon.

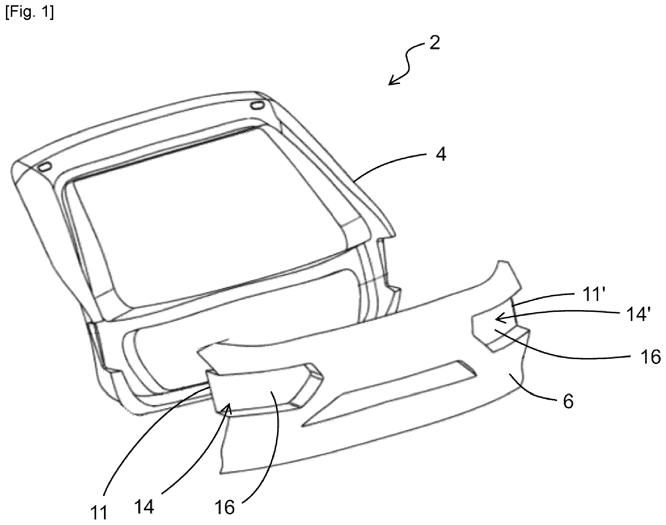

Les figures 1 à 3 illustrent un hayon 2 selon l'art antérieur. Certaines pièces de carrosserie, par exemple le hayon 2 de la figure 1, comportent usuellement une doublure 4 (ou panneau intérieur) constituant la partie structurelle de la pièce de carrosserie et un panneau extérieur 6 constituant une peau d'aspect. La doublure 4 et le panneau extérieur 6 sont généralement assemblés par collage. Un cordon de colle 8 peut donc être déposé sur la périphérie de la face interne du panneau extérieur afin de réaliser cet assemblage. Pour ce faire, il est connu, dans certaines configurations, que le panneau extérieur comprenne au moins une paroi de collage 10 formant une rampe (ou pontet) de réception de colle sur laquelle une partie du cordon de colle 8 disposée sur le panneau extérieur est déposée.

De manière générale, la paroi de collage 10 peut s'étendre le long d'une paroi latérale 12 du panneau extérieur, un des ses côtés 10' étant relié à cette paroi latérale 12. Un second côté 10" de la paroi de collage 10, opposé au côté 10', n'est quant à lui relié à aucune paroi. La paroi de collage 10 peut par exemple s'étendre depuis des parois de fond 14 et 14' d'un renfoncement 16 ménagé au niveau d'extrémités gauche 11 et droite 11' du panneau extérieur 6 et formant un logement d'un bloc optique (ces deux parties sont visibles sur la figure 1), pour rejoindre la paroi supérieure 18 du panneau extérieur 6, la paroi supérieure se situant sous la lunette d'un hayon assemblé. En d'autres termes, un tronçon du cordon de colle 8 est déposé, sur la partie de paroi de collage 10 partant de l'arête supérieure de la face interne 15 de la paroi de fond 14 (qui est une partie de la face interne 17 du panneau extérieur 6) jusqu'à rejoindre la face interne 17 de la paroi supérieure 18. La paroi de collage 10 forme donc une pente de transition présentant une variation angulaire aussi faible que possible entre la paroi de fond 14 du renfoncement 16 et la paroi supérieure 18. Une telle configuration permet d'assurer un collage homogène en évitant que le cordon de colle 8 déposé ne soit dégradé, voire chassé, hors de certaines zones à coller lors de l'assemblage par mise en contact sous effort d'assemblage entre le panneau extérieur 6 et la doublure 4 et ce à cause de positionnements angulaires inadéquats entre les différentes zones/surfaces impliquées dans le collage. Cela permet par exemple d'éviter que des zones/surfaces du panneau extérieur enduites de colle s'étendent dans une direction sensiblement parallèle à la direction d'assemblage du panneau extérieur et de la doublure. Il est avantageux que l'angle formé par la paroi de collage 10, formant ladite pente de transition, et une direction de collage du panneau extérieur 6 sur la doublure 4 soit supérieur ou égale à 30° afin d'obtenir l'effet souhaité. Cela permet d'assurer un bon accouplement local entre le panneau extérieur et la doublure et d'appliquer une pression de collage homogène sur l'ensemble du cordon de colle.

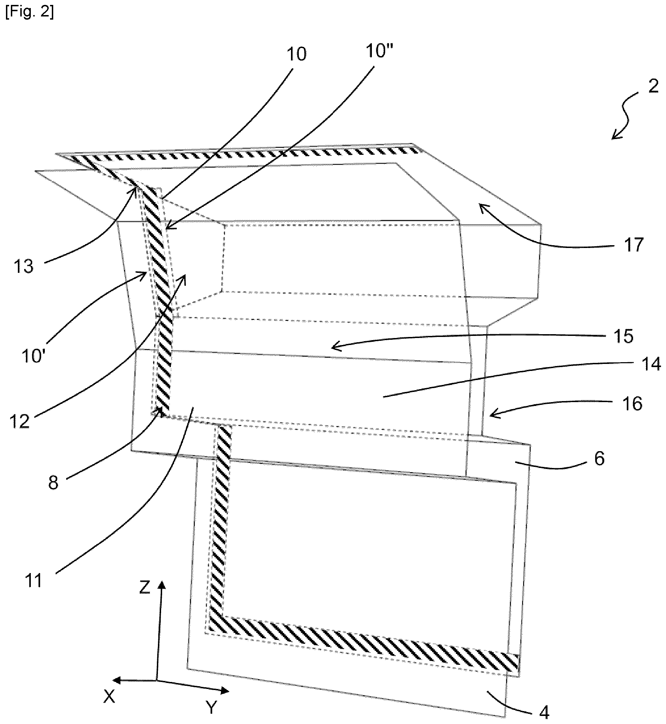

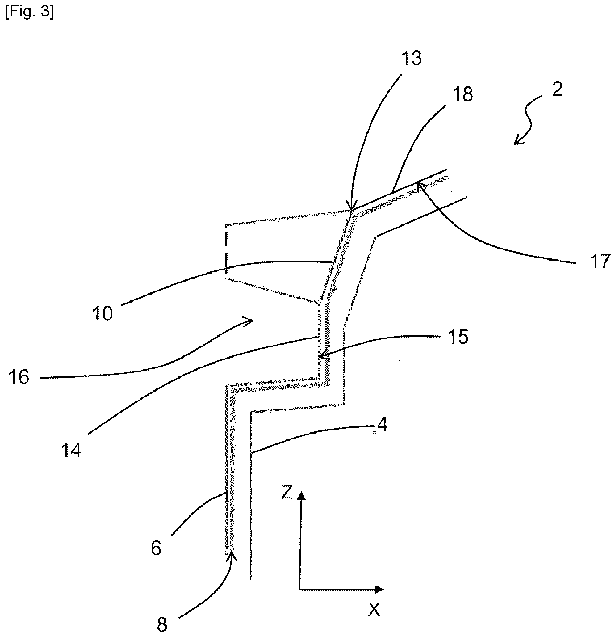

La paroi de collage 10 comprend dans la configuration de la figure 2 et de la figure 3 une extrémité supérieure 13 raccordée à la face interne 17 de la paroi supérieure 18 du panneau extérieur 6, le cordon de colle 8 étant déposé sur la paroi de collage 10 puis se prolongeant de cette dernière à ladite face interne 17 comme cela est visible sur les figures 2 et 3. Cela conduit à un inconvénient d'ordre esthétique. En effet, le raccordement de la paroi de collage 10, par son extrémité supérieure 13, à la face interne 17 du panneau extérieur 6 conduit à une dégradation d'aspect dû au moulage, visible sur la face externe 19 de la paroi supérieure 18 du panneau extérieur en regard de la zone de liaison de la paroi de collage 10 se raccordant sur la face interne 17 de la paroi supérieure 18.

Pour masquer ce défaut, dit de « retassure », il est connu de réaliser une ligne de style au niveau de la zone du panneau extérieur présentant un défaut d'aspect, au droit de l'extrémité 13, par exemple en réalisant un changement de forme local du panneau extérieur comme cela est visible sur la figure 3, en créant une discontinuité angulaire sur la face externe 19.

Cependant, certains constructeurs automobiles ne souhaitent pas concéder d'adaptation de style pour cacher un défaut d'aspect. Dès lors, il n'est plus possible d'envisager que la paroi de collage soit reliée par une extrémité supérieure 13 au milieu de la face interne du panneau extérieur de sorte à créer un défaut d'aspect sur la face externe du panneau extérieur (i.e. dans une zone nécessitant la mise en place d'artifices visant à masquer un défaut d'aspect)..

L'invention a notamment pour but de fournir un panneau extérieur pouvant être collé à une doublure sans générer de défaut d'aspect du hayon obtenu et ce sans adaptation de style tout en permettant de garantir une étanchéité d'un volume interne situé entre le panneau extérieur et la doublure, cette étanchéité étant localement réalisée par leur assemblage avec l'utilisation du cordon de colle au niveau d'un angle du panneau extérieur.

À cet effet, l'invention a pour objet un panneau extérieur de hayon de véhicule automobile destiné à être collé sur une doublure, le panneau extérieur étant réalisé en matière plastique et comprenant :
- un corps principal comprenant au moins une paroi latérale et une paroi supérieure,
- un renfoncement formant un logement de bloc optique et comprenant une paroi de fond,
- une paroi de collage s'étendant depuis la paroi de fond et le long de la paroi latérale, comprenant un premier côté relié à la paroi latérale, et comprenant une portion terminale reliée à un bord supérieur de la paroi supérieure, la paroi de collage formant une première rampe de collage du panneau extérieur sur une doublure,
- une première paroi de liaison s'étendant au niveau de la portion terminale de la paroi de collage, depuis un second côté de la paroi de collage opposé au premier côté de la paroi de collage relié à la paroi latérale, jusqu'à une face interne de la paroi supérieure du corps principal de manière à former une seconde rampe de collage du panneau extérieur sur une doublure, une extrémité de la première paroi de liaison fixée à la face interne de la paroi supérieure du corps principal ayant une épaisseur inférieure à celle de la paroi supérieure du corps principal.

Ainsi, la structure obtenue permet à la fois d'éviter l'apparition de défauts d'aspect sur la face externe du panneau extérieur et d'assurer une continuité dans le dépôt d'un cordon de colle. Tout d'abord, le raccordement de la paroi de collage au bord supérieur du panneau extérieur permet une liaison en bord de pièce plutôt qu'en pleine peau. On évite donc l'apparition de défaut d'aspect de type retassure, et donc la nécessité d'avoir à réaliser une ligne de style au niveau de la zone du panneau extérieur présentant un défaut d'aspect. De plus, la première paroi de liaison s'étendant depuis la paroi de collage vers la face interne du panneau extérieur permet d'assurer une continuité de surface de la paroi de collage au niveau de la portion terminale et ainsi une continuité de dépôt d'un cordon de colle. Enfin, la connexion de cette première paroi de liaison avec la face interne du panneau extérieur est d'une épaisseur moindre ce qui permet d'éviter l'apparition d'un défaut d'aspect et ce sans risque de rupture de cette connexion car la pression de collage est exercée sur la paroi de collage au niveau de sa connexion au bord supérieur du panneau extérieur.

Suivant d'autres caractéristiques optionnelles du panneau extérieur prises seules ou en combinaison :
- l'épaisseur de l'extrémité de la première paroi de liaison fixée à la face interne du corps principal est comprise entre 10% et 15% de celle de la paroi supérieure du corps principal,
- l'angle entre la première paroi de liaison et une face externe du corps principal est compris entre 60° et 90°,
- le panneau extérieur comprend une seconde paroi de liaison reliée à la première paroi de liaison, à la paroi de collage et à la face interne du corps principal de manière à former un volume étanche à l'eau et délimité par la première paroi de liaison, la seconde paroi de liaison, la paroi de collage et le corps principal, une extrémité de la seconde paroi de liaison fixée à la face interne du corps principal ayant une épaisseur inférieure à celle de la paroi supérieure du corps principal,
- l'épaisseur de l'extrémité de la seconde paroi de liaison fixée à la face interne du corps principal est comprise entre 10% et 15% de celle de la paroi supérieure du corps principal,
- l'angle entre la seconde paroi de liaison et la face interne du corps principal est compris entre 60° et 90°, et
- le panneau extérieur est réalisé dans un matériau choisi parmi le polypropylène, le polycarbonate, le polyamide, l'acrylonitrile butadiène styrène ou un mélange de polycarbonate et d'acrylonitrile butadiène styrène.

L'invention a également pour objet un hayon de véhicule automobile comprenant
- un panneau extérieur selon l'invention,
- une doublure,
- un cordon de colle disposé entre le panneau extérieur et la doublure de manière à assembler par collage le panneau extérieur et la doublure et à créer entre eux un volume intérieur étanche à l'eau,
le cordon de colle étant disposé sans discontinuité depuis la paroi de collage jusqu'à la face interne du corps principal en étant disposé sur la première paroi de liaison.

L'invention a également pour objet un procédé de fabrication d'un panneau extérieur de hayon de véhicule automobile selon l'invention à l'aide d'un moule comprenant une matrice, un poinçon et au moins deux cales mobiles dans une même direction et dans des sens opposés, le procédé comprenant les étapes suivantes :
- fermeture du moule,
- injection de matière plastique formant le panneau extérieur, la première paroi de liaison étant moulée entre les deux cales mobiles,
- retrait des cales mobiles par déplacement dans des sens opposées,
- ouverture du moule et extraction du panneau extérieur.

### Brève description des figures

L'invention sera mieux comprise à la lecture de la description qui va suivre donnée uniquement à titre d'exemple et faite en se référant aux dessins annexés dans lesquels :
[Fig. 4] est une première vue en perspective d'une portion d'un panneau extérieur de hayon selon l'invention,
[Fig. 5] est une vue en perspective d'un angle d'une portion d'un panneau extérieur de hayon selon l'invention,
[Fig. 6] est une vue en perspective d'une portion d'un panneau extérieur de hayon selon l'invention,
[Fig. 7] est une première vue en coupe d'une portion d'un panneau extérieur de hayon selon l'invention,
[Fig. 8] est une seconde vue en coupe d'une portion d'un panneau extérieur de hayon selon l'invention, et
[Fig. 9] est une représentation (en coupe locale) d'un moule d'un panneau extérieur de hayon selon l'invention.

### Description détaillée

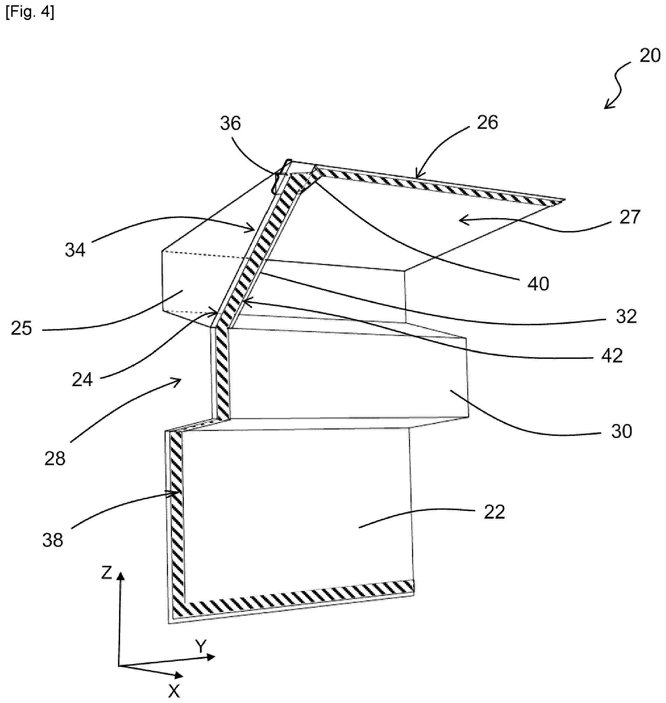

On se réfère désormais aux figures 4 à 6 illustrant une portion d'un panneau extérieur 20 de hayon de véhicule automobile (hayon pouvant être similaire au hayon 2 de la figure 1) destiné à être collé sur une doublure (non représenté). Les figures 4 à 6 illustrent un côté du panneau extérieur 20 comprenant un logement de bloc optique. La même configuration, c'est-à-dire une portion de panneau extérieur comprenant un second logement de bloc optique, est mise en place de l'autre côté du panneau extérieur 20 (non représenté sur les figures 4 à 6, mais cette configuration est visible sur la figure 1. Le panneau extérieur 20 est réalisé en matière plastique. Il peut par être réalisé dans un matériau choisi parmi le polypropylène, le polycarbonate, le polyamide, l'acrylonitrile butadiène styrène ou un mélange de polycarbonate et d'acrylonitrile butadiène styrène.

Le panneau extérieur 20 comprend en partie basse du hayon un corps principal 22 comprenant au moins un bord latéral 24 (formant localement une limite d'une paroi latérale 25) et un bord supérieur 26 (formant localement une limite d'une paroi supérieure 27).

Le panneau extérieur 20 comprend en outre sur sa face externe un renfoncement 28 formant un logement de bloc optique et comprenant une paroi de fond 30.

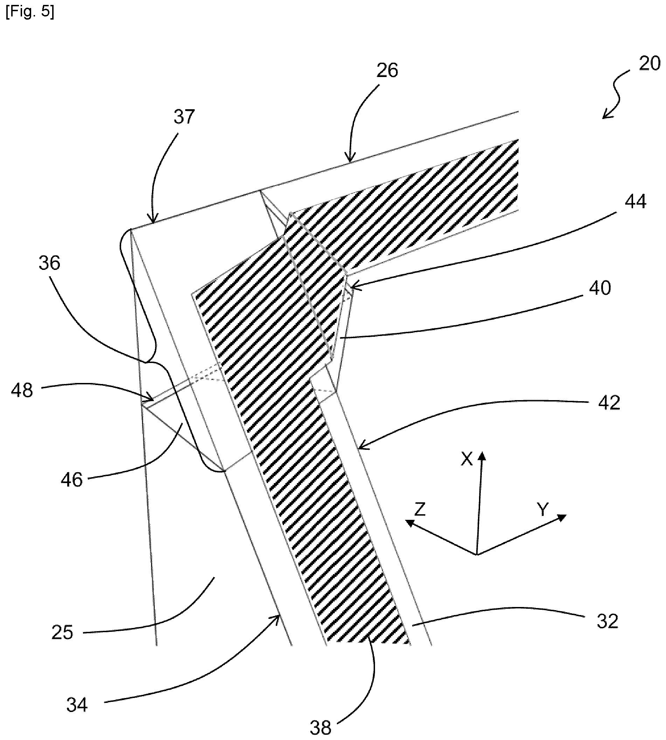

Le panneau extérieur 20 comprend en outre sur sa face interne une paroi de collage 32 s'étendant depuis la paroi de fond 30 et le long de la paroi latérale 25, plus précisément le long du bord latéral 24. Cette paroi de collage 32 comprend un premier côté 34 relié au bord latéral 24 de la paroi latérale 25, et une portion terminale 36 reliée au bord supérieur 26 de la paroi supérieure 27 du corps principal 22, la paroi de collage 32 formant une première rampe de collage du panneau extérieur 20 sur une doublure. En effet, et comme cela est visible sur les figures 4 et 5, un cordon de colle 38 est déposé sur la face interne du panneau extérieur 20, ce cordon de colle s'étendant (non représenté) de façon périphérique en longeant le bord du panneau extérieur 20 pour former une piste de collage. Il est entre autres déposé sur la face interne de la paroi de fond 30 et sur la paroi de collage 32 et enfin sur le bord supérieur 26. Comme expliqué plus haut, la paroi de collage 32 forme, sur cette première rampe, une pente de transition, comme expliqué pour l'art antérieur, entre la paroi de fond 30 du renfoncement 28 et le bord supérieur 26 de la paroi supérieure 27 du panneau extérieur 20 permettant d'assurer un collage homogène du panneau extérieur 20 avec une doublure.

La zone de jonction 37 entre la paroi de collage 32 et le bord supérieur 26 peut être d'une épaisseur comprise entre 50% et 75% de l'épaisseur du reste du panneau extérieur 20, en particulier de l'épaisseur de la paroi supérieure 27.

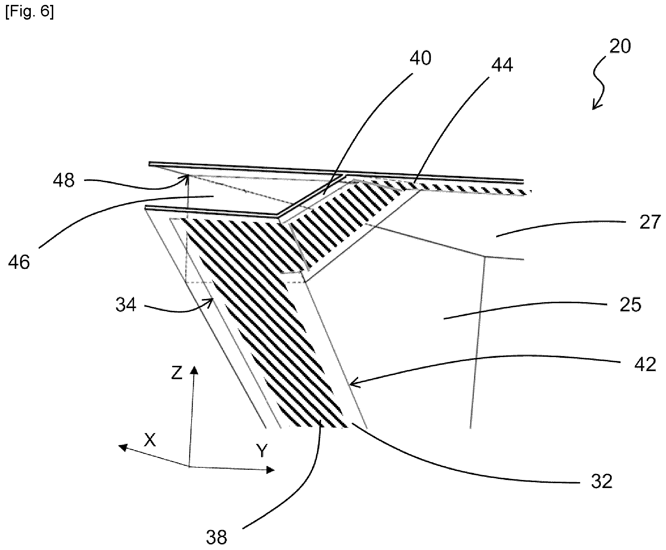

Le panneau extérieur 20 comprend en outre une première paroi de liaison 40 (particulièrement visible sur les figures 5 et 6) s'étendant depuis la portion terminale 36 de la paroi de collage 32, et depuis un second côté 42 de la paroi de collage 32 opposé au premier côté 34 de la paroi de collage 32 relié au bord latéral 24, jusqu'à une face interne de la paroi supérieure 27 du corps principal 22 de manière à former une seconde rampe de collage du panneau extérieur 20 sur une doublure, une extrémité 44 (visible sur les figures 5 et 6) de la première paroi de liaison 40 reliée à la face interne du corps principal 22 ayant une épaisseur inférieure à celle de la face supérieure 27 du panneau extérieur 20.

La première paroi de liaison 40 permet donc de réaliser une jonction entre la paroi de collage 32 et la face interne de la paroi supérieure 27 du panneau extérieur 20 afin d'assurer une continuité de surface pour déposer le cordon de colle 38. Cette surface comprend la paroi de collage 32 s'étendant depuis la paroi de fond 30 jusqu'au bord supérieur 26 de la paroi supérieure 27, et la première paroi de liaison 40 permettant de relier la portion terminale 36 à la face interne de la paroi supérieure 27 du panneau extérieur 20. Le cordon de colle 38 est donc déposé sur le pourtour de la face interne du panneau extérieur 20, et donc sur la paroi de collage 32 jusqu'à la jonction au bord supérieur 26, et est déposé sur la première paroi de liaison 40 et sur la face interne du panneau extérieur 20 en longeant le bord supérieur 26. Lors du collage du panneau extérieur 20 avec une doublure, la pression d'assemblage entre le panneau extérieur 20 et la doublure est localement supportée au niveau de la jonction entre la portion terminale 36 et le bord supérieur 26.

La première paroi de liaison 40 permet la continuité de dépose du cordon de colle 38 mais la liaison entre la première paroi de liaison 40 et la face interne du corps principal 22 est amincie de sorte à ne pas générer de défaut d'aspect (retassure de moulage) sur la face externe de la paroi supérieure 27 du corps principal 22. Cet amincissement est permis car les efforts de collage sont repris et répartis ailleurs. Comme nous le verrons par la suite, la liaison entre la première paroi de liaison 40 et la face interne de la paroi supérieure du corps principal 22 permet d'obtenir une étanchéité de la zone dans laquelle la première paroi de liaison 40 est ménagée.

Avantageusement, l'épaisseur de l'extrémité 44 de la première paroi de liaison 40 fixée à la face interne du corps principal 22 a une épaisseur comprise entre 10% et 15% de celle du reste du panneau extérieur. Par exemple, son épaisseur peut être comprise :
- entre 0,3 et 0,45 millimètre pour un panneau extérieur 20 d'une épaisseur sensiblement égale à 3 millimètres, ou
- entre 0,32 et 0,48 millimètre pour un panneau extérieur 20 d'une épaisseur sensiblement égale à 3,2 millimètres.

Le ratio d'épaisseurs décrit ci-dessus permet à la fois d'éviter l'apparition de défaut d'aspect (comme expliqué ci-dessus) et très peu, voire aucun risque de rupture de l'extrémité 44 de la première paroi de liaison 40 au moment du collage (l'effort d'assemblage étant proportionnel à la surface subissant une pression, il est repris comme expliqué auparavant par la jonction entre la portion terminale 36 de la paroi de collage 30 et le bord supérieur 26).

Avantageusement, l'angle entre la première paroi de liaison 40 et la face externe du corps principal 22 est compris entre 60° et 90°. Un tel angle permet d'augmenter la résistance de l'extrémité 44 de la paroi de liaison 40 car il favorise, lors du collage, une sollicitation par des phénomènes de compression que par rapport à des phénomènes de flexion.

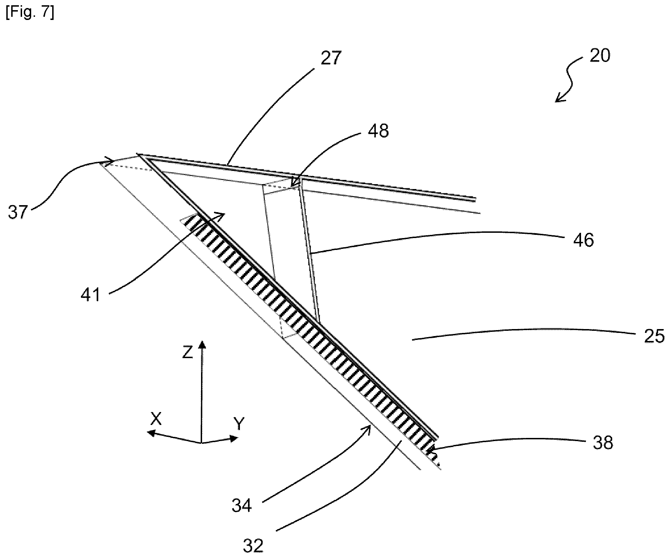

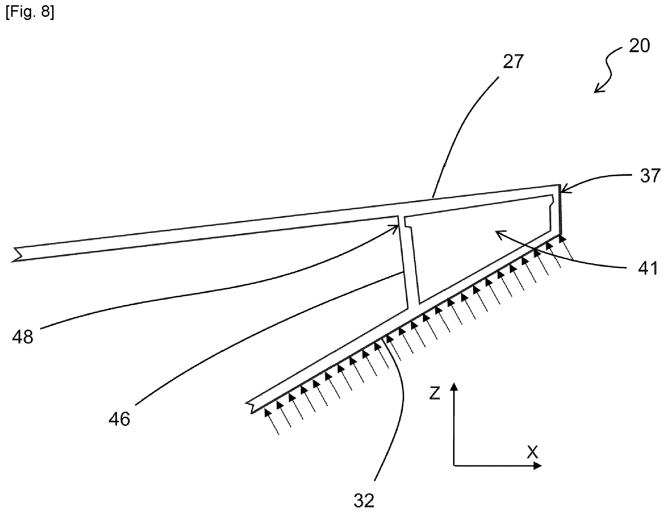

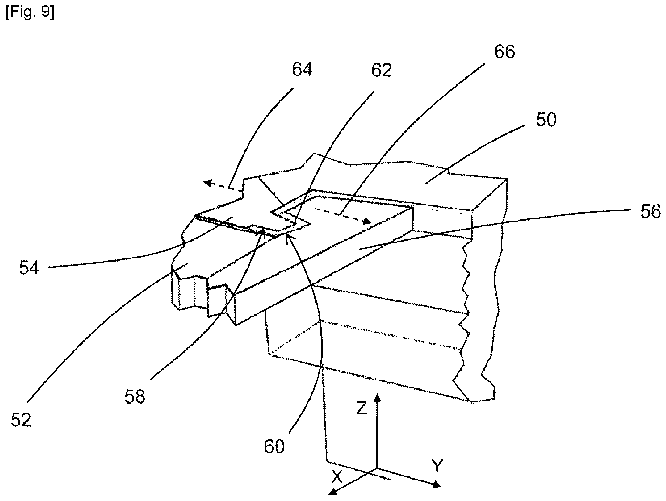

Le panneau extérieur 20 peut en outre comprendre une seconde paroi de liaison 46 (visible sur les figures 5 à 8) reliée à la première paroi de liaison 40, à la paroi de collage 32, à la paroi latérale 25 et à la face interne du corps principal 22 de manière à former un volume 41 (référencé sur la figure 7) étanche à l'eau et délimité par la première paroi de liaison 40, la seconde paroi de liaison 46, la paroi de collage 32 et le corps principal 22. En effet, et comme cela est visible sur la figure 9 illustrant un moule du panneau extérieur 20, la première paroi de liaison 40 est moulée par l'intermédiaire de parties mobiles (ou cales mobiles) du moule et ce afin de permettre un démoulage du panneau extérieur 20 moulé. Cela conduit à l'apparition d'une discontinuité de la paroi latérale 25 du panneau extérieur 20 (issue du retrait d'un élément mobile du moule). Afin d'éviter toute entrée d'eau dans le hayon par cette discontinuité, le volume 41 laissé libre par le retrait de l'élément mobile est étanche et délimité par la première paroi de liaison 40, la seconde paroi de liaison 46, la paroi de collage 30 et le corps principal 22.

Une extrémité 48 de la seconde paroi de liaison 46 reliée à la face interne de la paroi supérieure 27 du corps principal 22 peut avoir une épaisseur inférieure à celle de la paroi supérieure du corps principal 22. Le ratio d'épaisseur peut être le même que pour l'extrémité 44 de la première paroi de liaison 40 (épaisseur comprise entre 10% et 15% de celle du reste de la paroi supérieure 27). Cette réduction d'épaisseur permet d'obtenir les mêmes effets que pour la première paroi de liaison 40 (absence de défaut d'aspect sur la face externe du corps principal 22, pas de risque de rupture de cette extrémité au moment du collage).

Comme pour la première paroi de liaison 40, l'angle entre la seconde paroi de liaison 46 et la face externe du corps principal 22 est compris entre 60° et 90°. Comme pour la première paroi de liaison 40, un tel angle permet d'augmenter la résistance de l'extrémité 48 de la seconde paroi de liaison 46 car il favorise, lors du collage, une sollicitation par des phénomènes de compression que par rapport à des phénomènes de flexion.

L'invention a également pour objet un hayon de véhicule automobile comprenant
- le panneau extérieur 20 selon l'invention,
- une doublure,
- le cordon de colle 38 disposé entre le panneau extérieur 20 et la doublure de manière à assembler par collage le panneau extérieur 20 et la doublure et à créer entre le panneau extérieur et la doublure un volume intérieur étanche à l'eau,
le cordon de colle 38 étant disposé sans discontinuité de la paroi de collage 32 à la face interne du corps principal 22 en étant disposé sur la première paroi de liaison 40.

L'invention a également pour objet un procédé de fabrication d'un panneau extérieur 20 de hayon de véhicule automobile selon l'invention à l'aide d'un moule comprenant une matrice 50, un poinçon 52 et au moins deux cales 54 et 56 mobiles dans une même direction et dans des sens opposés. Le procédé comprend les étapes suivantes :
- Fermeture du moule. La figure 9 illustre une position « moule fermé » des cales mobiles 54 et 56, de la matrice 50 et du poinçon 52. Cette position fermée permet de définir plusieurs zones : une première zone 58 permettant le moulage de la paroi de collage 32, une seconde zone 60 permettant le moulage de la première paroi de liaison 40 et une troisième zone 62 permettant le moulage de la seconde paroi de liaison 46.
- Injection de matière plastique formant le panneau extérieur 2. La première paroi de liaison 40 est moulée entre les deux cales mobiles 54 et 56, tout comme la seconde paroi de liaison 46.
- Retrait des cales mobiles 54 et 56 par déplacement dans des sens opposés 64 et 66. Ce retrait dans deux sens opposés permet de libérer le panneau extérieur 20 moulé pour l'extraire du moule. Le retrait de la cale mobile 54 conduit à l'apparition de la discontinuité dans la paroi latérale du panneau extérieur 20 décrite ci-dessus, et nécessitant la réalisation d'un volume 41 étanche à l'eau afin d'éviter toute entrée d'eau dans le hayon.
- Ouverture du moule et extraction du panneau extérieur 20.

L'invention n'est pas limitée aux modes de réalisation présentés et d'autres modes de réalisation apparaîtront clairement à l'homme du métier.

### Liste de références

2 : hayon
4 : doublure
6, 20 : panneau extérieur
8, 38 : cordon de colle
10, 32 : paroi de collage
11, 11' : extrémités du panneau extérieur
12, 25 : paroi latérale
13 : extrémité supérieure de la paroi de collage
14, 14', 30 : paroi de fond
15 : face interne de la paroi de fond
16, 28 : renfoncement
17 : face interne de la paroi supérieure
18, 27 : paroi supérieure
19 : face externe de la paroi supérieure 18
22 : corps principal
24 : bord latéral
26 : bord supérieur
10', 34 : premier côté de la paroi de collage
36 : portion terminale de la paroi de collage
37 : zone de jonction
40 : première paroi de liaison
41 : volume
10", 42 : second côté de la paroi de collage
44 : extrémité de la première paroi de liaison
46 : seconde paroi de liaison
48 : extrémité de la seconde paroi de liaison
50 : matrice
52 : poinçon
54, 56 : cales mobiles
58 : première zone
60 : deuxième zone
62 : troisième zone
64, 66 : directions de retrait des cales mobiles

## Revendications

1. Panneau extérieur (20) de hayon de véhicule automobile destiné à être collé sur une doublure, le panneau extérieur (20) étant réalisé en matière plastique et comprenant :
- un corps principal (22) comprenant au moins une paroi latérale (24) et une paroi supérieure (27),
- un renfoncement (28) formant un logement de bloc optique et comprenant une paroi de fond (30), et
- une paroi de collage (32) s'étendant depuis la paroi de fond (30) et le long de la paroi latérale (24), comprenant un premier côté (34) relié à la paroi latérale (24), et comprenant une portion terminale (36) reliée à un bord supérieur (26) de la paroi supérieure (27), la paroi de collage (32) formant une première rampe de collage du panneau extérieur (20) sur une doublure,
- une première paroi de liaison (40) s'étendant au niveau de la portion terminale (36) de la paroi de collage (32), depuis un second côté (42) de la paroi de collage (32) opposé au premier côté (34) de la paroi de collage (32) relié à la paroi latérale (24), jusqu'à une face interne du corps principal (22) de manière à former une seconde rampe de collage du panneau extérieur (20) sur une doublure, une extrémité (44) de la première paroi de liaison (40) fixée à la face interne du corps principal (22) ayant une épaisseur inférieure à celle de la paroi supérieure (27) du corps principal (22).

2. Panneau extérieur (20) selon la revendication 1, dans lequel l'épaisseur de l'extrémité (44) de la première paroi de liaison (40) fixée à la face interne du corps principal (22) est comprise entre 10% et 15% de celle de la paroi supérieure (27) du corps principal (22).

3. Panneau extérieur (20) selon l'une quelconque des revendications précédentes, dans lequel l'angle entre la première paroi de liaison (40) et une face externe du corps principal (22) est compris entre 60° et 90°.

4. Panneau extérieur (20) selon l'une quelconque des revendications précédentes, comprenant une seconde paroi de liaison (46) reliée à la première paroi de liaison (40), à la paroi de collage (32) et à la face interne du corps principal (22) de manière à former un volume (41) étanche à l'eau et délimité par la première paroi de liaison (40), la seconde paroi de liaison (46), la paroi de collage (32) et le corps principal (22), une extrémité (48) de la seconde paroi de liaison (46) fixée à la face interne du corps principal (22) ayant une épaisseur inférieure à celle de la paroi supérieure (27) du corps principal (22).

5. Panneau extérieur (20) selon la revendication précédente, dans lequel l'épaisseur de l'extrémité (48) de la seconde paroi de liaison (46) fixée à la face interne du corps principal (22) est comprise entre 10% et 15% de celle de la paroi supérieure (27) du corps principal (22).

6. Panneau extérieur (20) selon l'une quelconque des revendications 4 ou 5, dans lequel l'angle entre la seconde paroi de liaison (46) et la face interne du corps principal (22) est compris entre 60° et 90°.

7. Panneau extérieur (20) selon l'une quelconque des revendications précédentes, le panneau extérieur (20) étant réalisé dans un matériau choisi parmi le polypropylène, le polycarbonate, le polyamide, l'acrylonitrile butadiène styrène ou un mélange de polycarbonate et d'acrylonitrile butadiène styrène.

8. Hayon de véhicule automobile comprenant :
- un panneau extérieur (20) selon l'une quelconque des revendications précédentes,
- une doublure,
- un cordon de colle (38) disposé entre le panneau extérieur (20) et la doublure de manière à assembler par collage le panneau extérieur (20) et la doublure et à créer entre eux un volume intérieur étanche à l'eau,
le cordon de colle (38) étant disposé sans discontinuité de la paroi de collage (32) à la face interne du corps principal (22) en étant disposé sur la première paroi de liaison (40).

9. Procédé de fabrication d'un panneau extérieur (20) de hayon de véhicule automobile selon l'une quelconque des revendications 1 à 7 à l'aide d'un moule comprenant une matrice (50), un poinçon (52) et au moins deux cales (54, 56) mobiles dans une même direction et dans des sens opposés, le procédé comprenant les étapes suivantes :
- fermeture du moule,
- injection de matière plastique formant le panneau extérieur (20), la première paroi de liaison (40) étant moulée entre les deux cales mobiles (54, 56),
- retrait des cales mobiles (54, 56) par déplacement dans des sens opposées,
- ouverture du moule et extraction du panneau extérieur (20).
